# EUROPEAN PATENT APPLICATION

(11) **EP 3 617 007 A1**
(43) Date of publication of application: **04.03.2020**
(21) Application number: 19191626.1
(22) Date of filing: 14.08.2019
(51) Int. Cl.: B60R 19/48, B66F 9/075, G01L 1/25, B66F 17/00

(54) **IMPACT SENSOR DEVICE, A FORK-LIFT TRUCK COMPRSING SUCH A DEVICE, AND A METHOD FOR ARRANGING SUCH A DEVICE TO A FORK-LIFT TRUCK**

(30) Priority: 20.08.2018 SE 1850993
(71) Applicant: Toyota Material Handling Manufacturing Sweden AB, 595 81 Mjölby (SE)
(72) Inventor: SVENSSON, Jan, 602 21 Norrköping (SE)
(74) Representative: Zacco Sweden AB

(57) **Abstract**

The invention relates to an impact sensor device (1), comprising an elongated body (3) having a circumferential outer wall (5) and a hollow interior (7), the outer wall (5) comprising a resilient material. The body (3) comprises a first end section (9) and second end section (11), the sensor device (1) further comprises a control unit (13). The device further comprises an actuator (15) providing a sound signal (17) directed into the hollow interior (7) of the body (3), the actuator (15) being arranged at the first end section (9). The device further comprises a sensor (19) for monitoring the sound signal (17), the sensor (19) being arranged at the second end section (11). The resilient outer wall (5) of the body (3) is arranged so as to cause a geometrical change in a cross section of the hollow interior (7) when the body (3) is subjected to an impact with an external object (21), wherein the control unit (13) is arranged to monitor the sound signal (17) and alterations thereof, which alterations are contingent on geometrical changes of the cross section of the hollow interior (7). The invention further relates to a fork-lift truck comprising such an impact sensor device (1), and a method of arranging such an impact sensor device (1) to a fork-lift truck.

## Description

### TECHNICAL FIELD

The present disclosure relates to an impact sensor device, a fork-lift truck comprising such a device, and a method for arranging such a device to a fork-lift truck.

### BACKGROUND ART

Safety is generally always a desirable goal in the society of today, both with regards to material/structural integrity and personal injuries. This is especially the case when dealing with machinery and vehicles as such technology inherently brings with it higher risks if various kinds of accidents occur, such as in industrial environments especially. To avoid damage and injury safety may be increased in a plurality of ways, wherein different types of sensors and sensor devices is one field in which avoidance may be increased by means of early detection of situations which may be potentially harmful. Different types of object sensors may be used as a means of detecting and avoiding impacts between objects, vehicles, people or other, wherein detection of any such impact there between may be detected and then acted on accordingly.

There are numerous principles and technical solutions for detecting objects in the vicinity of a detector or sensor or a device comprising such. Such sensors or sensor devices may utilize direct mechanical contact, IR-detection, sonar, magnetic fields to name a few examples. Different types of sensors using different mechanics may in turn exhibit different pros and cons depending on their intended usage and functionality.

For several types of applications regarding impact sensor devices, such devices in the form of elongated strip-like devices which may be used at various kind of surfaces so as to detect impacts about to occur at said surfaces. Such strip-like sensor devices need to be compact but also reliable and accurate to achieve their intended function in a proper manner.

### SUMMARY OF THE INVENTION

Despite prior art there is thus a need to develop an improved impact sensor device, which is sensitive and has high accuracy. There is also a need to develop an impact sensor device, which is cheap to manufacture and repair. Furthermore, there is a need to develop a fork-lift truck comprising such an impact sensor device. Even further, there is a need to develop a method for arranging such an impact sensor device to a fork-lift truck.

An object of the invention is thus to provide an improved drill bit change system, which impact sensor device, which is sensitive and has high accuracy. Additional objects are respectively to provide an impact sensor device, which is cheap to manufacture and repair, and to provide a fork-lift truck comprising such a device. Furthermore, an object is to provide a method for arranging such an impact sensor device to a fork-lift truck.

According to a first aspect, an impact sensor device is provided. The impact sensor device may comprise an elongated body having a circumferential outer wall and a hollow interior. The outer wall may comprise a resilient material, the body may comprise a first end section and second end section, and the sensor device may further comprise a control unit. The impact sensor device may even further comprise an actuator, which actuator may provide a sound signal directed into the hollow interior of the body and may be arranged at the first end section. Furthermore, a sensor for monitoring the sound signal may be arranged at the second end section. The resilient outer wall of the body may be arranged so as to cause a geometrical change in a cross section of the hollow interior when the body is subjected to an impact with an external object. The control unit may be arranged to monitor the sound signal and alterations thereof, which alterations are contingent on said geometrical changes of the cross section of the hollow interior.

This has the advantage that an impact sensor device with several benefits is provided. The resilient outer wall may be subjected to an impact with a low level of risk for damage or injuries to an object or person moving towards said outer wall, due to its resilience. The mechanical contact between the outer wall and the object/person may thus occur (which is not the case for an IR-sensor for example) which may provide a situation in which such impacts are easy to experience without causing harm. The resilient outer wall will not however cause a hard mechanical contact between the sensor device and an object/person, wherein structural damage and/or personal injuries are avoided. Furthermore, the resilience of the outer wall may provide the possibility to bend and shape the elongated body to conform to different types of design and shapes, which is also beneficial as the impact sensor device becomes more versatile in its possible applications. Actuators and sensors for generating and detecting sound respectively are also commonly used technology, wherein the ingoing parts of the sensor device are readily available and comparatively cheap to other known actuator/sensor technology.

According to an aspect, the impact sensor device may be arranged at an outer surface of a vehicle.

This has the advantage that the vehicle is provided with a versatile and cost effective impact sensor device, which in turn provides such an impact sensor device for said vehicle.

According to an aspect, a vehicle comprising such an impact sensor device may be a material handling vehicle, preferably a fork-lift truck, even more preferred a floor-conveyor for indoor use.

This has the advantage that the such vehicles as a fork-lift truck or a floor-conveyor for indoor use, which are both commonly used in crowded facilities such as warehouses or similar may be provided with an impact sensor device according to the disclosure. Such an impact sensor device is easy to assemble with such vehicles due to its flexible characteristics, and such vehicles may be provided with a reliable and highly adaptable impact sensor device at a low cost.

According to an aspect, the he body of the impact sensor device is arranged so as to encircle the vehicle.

This has the advantage that impacts may be detected and avoided all-around said vehicle by means of using only one impact sensor device. This in turn is very cost effective as a full 360° impact detection system may be provided with only one impact sensor device.

According to an aspect, the control unit may be arranged to be coupled to a control unit of the vehicle, so as to be able to control movement of said vehicle.

This has the advantage that the impact sensor device may be in direct communication with the vehicle it is mounted to, which allows for a multitude of options regarding safety increasing operations for such a vehicle in a fast and reliable manner.

According to an aspect, the control unit may be arranged to stop movement of the vehicle when the alteration of the sound signal reaches a predetermined first threshold.

This has the advantage that an impact will be prevented from progressing as soon as a collision large enough to cause an alteration of the sound signal above said first threshold occurs. The vehicle stopping at that point prevents further risk for mechanical damage and/or personal injury due to such an impact. This may further also be utilized as for example an automatic parking device for a vehicle, wherein the vehicle may safely drive towards a wall or another type of obstacle and stop in its track when hitting said wall or obstacle.

According to an aspect, the control unit may be arranged to reverse movement of the vehicle when the alteration of the sound signal reaches a predetermined second threshold.

This has the advantage that the movement which was caused directly will be reversed which will greatly increase safety around such a vehicle. If, for example, such a vehicle hits a foot of a person standing close to the vehicle, the reversed movement will directly free the foot from being clamped by the vehicle. Thus a vary safe vehicle is achieved by providing it with such an impact sensor device.

According to an aspect, the impact sensor device may further comprise an attachment adapter, arranged to be fixedly attached to an object by means of first attachment means, and to receive and hold at least the elongated body by means of second attachment means.

This has the advantage that the mounting of the impact sensor device, to any object or surface may be easier to manage as the attachment adapter may be designed specifically for that purpose by means of the first attachment means. The remainder of the impact sensor device may then be mounted to the second attachment means, which may preferably be designed for a tool free, fast and easy mounting operation thereto. This also makes maintenance or repairs to the impact sensor device easier, as it may be removed and reattached in a fast and efficient manner.

According to an aspect, the impact sensor device may further comprise at least one additional body, each at least one additional body comprising a circumferential outer wall and a hollow interior, wherein each hollow interior of each at least one additional body is provided with a sound signal at a first end section of each additional body.

This has the advantage that the impact sensor device is provided with a higher "resolution" with regards to where an impact occurs, as the plurality of bodies may be positioned at separate positions and thus covering different parts of an object or other.

According to an aspect, the sound signal may be divided between the body and each at least one additional body, the sound signal being provided by means of the actuator.

This has the advantage that the a plurality of sound signals may be provided to a plurality of bodies while still only using one sound generating actuator. This provides an impact sensor device with a plurality of detection paths, but a low and cost effective manufacturing cost.

According to an aspect, each body may be provided with individual sound signals at their individual first end sections, said plurality of sound signals being provided by means of a corresponding plurality of actuators comprised in the sensor device.

This has the advantage that the each individual body may be tuned and calibrated individually, so as to provide a versatile impact sensor device which is adaptable for a plurality of ways of usage. For example, the individual bodies may be of different sizes, having different cross-sectional areas, being provided with different pitch of sounds, be calibrated to correspond to different threshold with regard to alterations of their sound signals and/or other.

According to an aspect, the material of the body is a polymeric material.

This has the advantage that the body may be highly customizable with regards to material properties and structural characteristics, and also be cost effective to manufacture as polymers are a commonly used manufacturing material. Several polymeric material are also inherently flexible and resilient making them perfect to use for a body of the device.

According to an aspect, the sound signal is comprised of ultrasound.

This has the advantage that the sound signal will not be heard by humans, wherein the functionality of the impact sensor device is achieved without causing any undesirable noise in the vicinity of the device.

According to an aspect, a fork-lift truck is provided. The fork-lift truck may comprise at least three wheels, lifting means for handling objects, and control means for operating movement of the truck and the lifting means. The fork-lift truck may further comprise an impact sensor device according to the disclosure.

This has the advantage that such a fork-lift truck may be provided with an impact sensor device which is cost effective to manufacture and arrange to such a fork-lift truck. Such a fork-lift truck may thus be provided with a device which may enhance the safety of operating such a fork-lift truck, with regards to both personal and material safety in a surrounding environment.

According to an aspect, a method for arranging an impact sensor device to a fork-lift truck is provided. The method comprising the steps of: a) choosing an area of the fork-lift truck where impact detection is desired, b) selecting at least one elongated body with a length corresponding to the area of the fork-lift truck, and c) arranging the impact sensor device so that the at least one elongated body covers the chosen area of the fork-lift truck.

This has the advantage that a method is provided, which method may be utilized to provide a fork-lift truck with an impact sensor device. The method may be used as a means of providing such a truck with such a device, and as a step of replacing an old and/or malfunction impact sensor device to such a truck.

Additional objectives, advantages and novel features of the invention will be apparent to one skilled in the art from the following details, and through exercising the invention. While the invention is described herein, it should be apparent that the invention may be not limited to the specifically described details. One skilled in the art, having access to the teachings herein, will recognize additional applications, modifications and incorporations in other areas, which are within the scope of the invention.

### BRIEF DESCRIPTION OF THE DRAWINGS

Below is a description of, as examples, embodiments with reference to the enclosed drawings, in which:

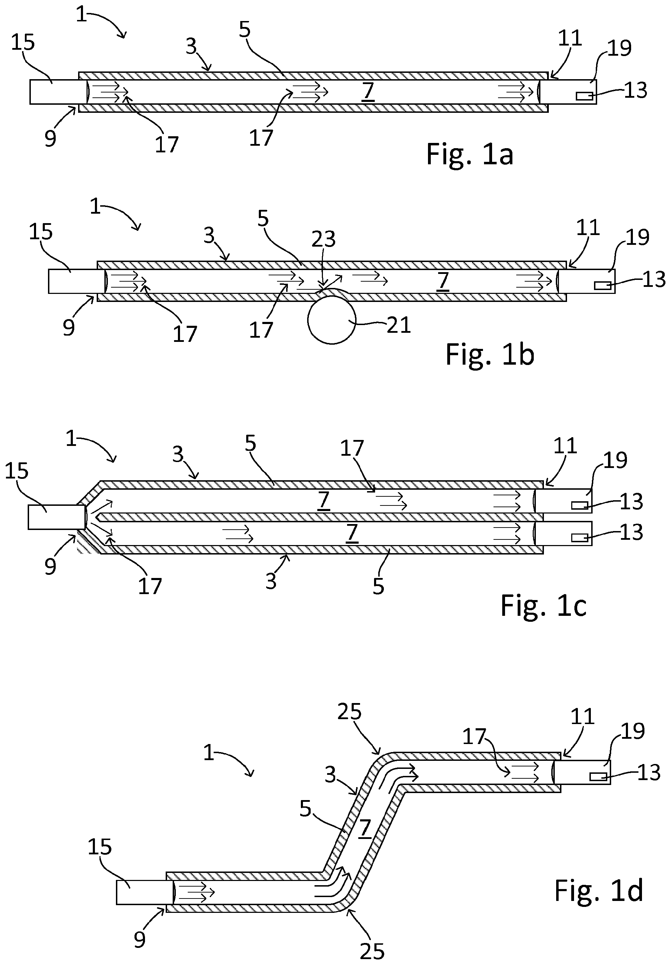

Fig. 1a shows an impact sensor device in a partly cross sectional side view according to an embodiment,
Fig. 1b shows an impact sensor device in a partly cross sectional side view according to an embodiment,
Fig. 1c shows an impact sensor device in a partly cross sectional side view according to an embodiment,
Fig. 1c shows an impact sensor device in a partly cross sectional side view according to an embodiment,
Fig. 1d shows an impact sensor device in a partly cross sectional side view according to an embodiment,
Fig. 2a shows a schematic vehicle provided with an impact sensor device in a side view according to an embodiment,
Fig. 2b shows a schematic vehicle provided with an impact sensor device in a top down view according to an embodiment,
Fig. 3 shows an impact sensor device attached to a surface in a cross sectional side view according to an embodiment,
Fig. 4 shows a schematic vehicle provided with an impact sensor device in a side view according to an embodiment, and
Fig. 5 shows a flowchart of a method for arranging an impact sensor device to a fork-lift truck.

### DETAILED DESCRIPTION

The detailed description with reference to the embodiments depicted are to be viewed as exemplary embodiments comprising a combination of certain features, which features have been described in detail above. It is thus to be understood that additional embodiments may be achieved by combining other features into embodiments not depicted herein. The figures are to be viewed as examples and not mutually exclusive combinations. It should also be noted that all figures shown and described are schematically represented, wherein generic parts of machinery or similar is not depicted for the sake of simplicity.

Fig. 1a shows an impact sensor device 1 in a partly cross sectional side view according to an embodiment. The impact sensor device 1 may comprise an elongated body 3 having a circumferential outer wall 5 and a hollow interior 7. In fig. 1a the elongated body 3 is shown in a cross sectional view so as to show the hollow interior 7 thereof. The outer wall 5 may further comprise a resilient material, making both said outer wall 5 and the elongated body 3 flexible and able to conform in shape to adjacent surfaces and/or objects. The material of the elongated body 3 may be a polymeric material, such as a rubber material or a flexible plastic material or similar. The body 3 may further comprise a first end section 9 and second end section 11. The impact sensor device 1 may also further comprise a control unit 13. Said control unit 13 may be arranged within the impact sensor device 1, or be arranged externally but being in communication with the sensor device 1 and its parts.

The impact sensor device 1 may further comprise an actuator 15 providing a sound signal 17 directed into the hollow interior 7 of the body 3 and being arranged at the first end section 9. The impact sensor device 1 may further comprise a sensor 19 for monitoring of said sound signal 17, the sensor 19 being arranged at the second end section 11. By means of the material of the elongated body 3 comprising a resilient material, the resilient outer wall 5 of the body 3 may be arranged so as to cause a geometrical change in a cross section of the hollow interior 7 when the body 3 is subjected to an impact with an external object (as is depicted in fig. 1b). The control unit 13 may then be arranged to monitor the sound signal 17 and alterations thereof, which alterations are contingent on geometrical changes of the cross section of the hollow interior 7.

The actuator 15 arranged at the first end section 9 of the body 3 may thus provide the sound signal 17 directly into the hollow interior 7, in which it will propagate through said hollow interior 7 until it reaches the second end section 11. The sound signal 17 will propagate through said hollow interior 7 in accordance with normal sound propagation. That is, parts of the sound signal 17 may move straight through the hollow interior 7 and reach the second end section 11 rather unaffected (if the body herein is perceived as straight). Parts of the sound signal 17 may instead bounce of an inner surface of the body, wherein for each such bounce the sound signal 17 may be partly absorbed by the material of the body 3, or bounce away from said inner surface in accordance with an angle of attack of said signal. The inner surface may further comprise a lining thereon, wherein said lining may be comprised of material having proper acoustic properties so as to maximize bounces and minimize absorption with regards to sound interacting with said lining.

The sensor arranged at the second end section 11 of the body 3 may then detect and monitor the sound signal 17 and/or parts thereof. Regardless of the shape, size and/or position of the elongated body 3 of the sensor device, the actuator 15 and the sensor 19 may be calibrated according to a predetermined sound signal 17 and with the outer wall 5 in a non-affected shape. The sound signal 17 produced by the actuator 15 may be labelled output-signal, and the sound signal 17 detected by the sensor 19 may be labelled input-signal. If the impact sensor device 1 is mounted into its intended location, and the circumferential outer wall 5 is not affected by any sort of contact with an external object, the output-signal and the input-signal may thus be set as a default setting for the impact sensor device 1. As should be understood, it does not matter if the output- and input-signals are close to equal of largely different, as the amount of sound moving from the actuator 15 to the sensor 19 may depend on the material, shape, size and/or other of the elongated body 3 in its intended location and/or positioning for that specific application. The sensor 19 may then be calibrated to perceive the input-signal as relating to the impact sensor device 1 not being affected by an impact with an external object. As should be obvious, the actuator 15 may comprise a loudspeaker or similar for generating the sound signal 17. Similarly, the sensor 19 may comprise a microphone or similar, which may monitor and detect the sound signal 17.

The sound signal 17 generated from the actuator 15 of the impact sensor device 1 may be comprised of ultrasound. By means of utilizing ultrasound as the sound signal 17 within the device, the sound signal 17 will not be heard by humans and will thus not act as noise pollution in environments in which the sensor device 1 is to be used. As should be obvious, the actuator 15 and the sensor 19 of the sensor device 1 may thus be adapted for generating and monitoring ultrasound respectively.

Turning the attention to fig. 1b, the impact sensor device 1 depicted therein is impacted by an external object 21, to such an extent that a geometrical change of the cross section of the hollow interior 7 has occurred. This will, as should be obvious and is illustrated in fig. 1b, affect the propagation of the sound signal 17 through the body 3. As a part of the sounds signal 17 bounces of the now angled inner surface 23 of the body 3, it will change its path therein and thus alter the input-signal detected by the sensor 19 at the second end section 11. The sensor 19 may thus indirectly detect the alteration of the geometrical change of the body 3 by means of a detection of the alteration of the sound signal 17. The sensor 19, and/or the control unit 13 in communication with the sensor 19 may then provide an "impact detected signal" if the alteration of the sound signal 17 reaches a predetermined threshold. Said threshold may differ in value relative the input-signal depending on the desired application of the impact sensor device 1, wherein the sensor device 1 may be calibrated to react to small or large geometrical changes in the cross section of the hollow interior 7. The threshold may also be detected by means of impacts of varying degree by means of the properties of the elongated body 3. The stiffness and thickness of the circumferential outer wall 5 may be modified to achieve different properties for the body 3, wherein the outer wall 5 itself may be utilized as a means for calibrating the threshold. If the outer wall 5 has a very thin thickness and a low stiffness, an impact with an external object may result in a geometrical change in the cross section almost immediately. On the contrary, if the outer wall 5 has a larger thickness and a low stiffness, an impact with an outer surface of the outer wall 5 may not lead to a geometrical change in the cross section of the hollow interior 7 directly, if the impact is small. The outer wall 5 itself may be slightly compressed by the impact, wherein a geometrical change does not occur until the impact propagates further. Thus, the sensor device 1 may be set to a very low threshold with regards to geometrical change in the cross section of the hollow interior 7, wherein the outer wall 5 may exhibit different properties which affects how big an impact needs to be to cause such a geometrical change. This provides versatility for the impact sensor 1 device, as it may easily and in a cost effective manner be modified for a wide range of different applications desiring different thresholds for detection of impacts.

The elongated body 3 may be shaped in various designs regarding its cross sectional shape. The body 3 may be comprise a tubular shape, a polygonal shape, a flat band-like shape or any combination of such shapes. The shape of a cross sectional area of the elongated body 3 and/or the hollow interior 7 does not affect the functionality of the sensor device 1, as the sensor 19 simply may be calibrated after the signal reaching said sensor 19. Thus, even if a specific shape/design/size of the elongated body 3 and/or the hollow interior 7 has a rather detrimental effect on a sound signal 17 moving there-through, the sensor 19 may still be calibrated using the output-signal as is, regardless of how it changed over the length of the body 3. Likewise, the outer wall 5 of the body 3 may be varied in various ways, and for example, the thickness of the wall does not need to be uniform over the extension of the body 3, nor be uniform radially in a cross section. The impact sensor device 1 may thus be modified in numerous ways to achieve specific characteristics and/or properties without deviating from the scope of the disclosure.

Fig. 1c shows an impact sensor device 1 in a partly cross sectional side view according to an embodiment. The impact sensor device 1 as depicted herein may further comprise at least one additional body 3, wherein each at least one additional body 3 comprises a circumferential outer wall 5 and a hollow interior 7. Each hollow interior 7 of each at least one additional body 3 may be provided with a sound signal 17 at a first end section 9 of each additional body 3. As is seen in fig. 1c, the impact sensor device 1 comprises one such additional body 3, but as should be understood any number of additional bodies 3 may be added to the sensor device 1 without deviating from the scope of the disclosure. The two elongated bodies 3 are herein depicted as positioned adjacent each other, but they may also exhibit separate orientations and shapes, wherein the two different bodies 3 may cover different areas and/or parts of an object, vehicle, structural element or other.

The impact sensor device 1 may, as depicted in fig. 1c, comprise one actuator 15 arranged at a common first end section 9 of the elongated bodies 3, wherein the sound signal 17 is divided between the body 3 and each at least one additional body 3, the sound signal 17 being provided by means of the actuator 15. Each body 3 of the impact sensor device 1 may further comprise its own individual sensor 19 at their respective second end sections 11. Thus, each body 3 may perform the impact detection function of the sensor device 1, wherein the individual sensors 19 may be tuned and calibrated independently so as to provide the desired behaviour and characteristics for each body 3. Thereby the sound signal 17 may behave in any manner with regards to how it is divided between the plurality of bodies 3 of the sensor device 1. In other words, it does not matter if one of the bodies receives a larger portion of the sound signal as an input signal, and/or if one of the bodies affects its respective sound signal more than the other body or bodies. As each body 3 may be calibrated by means of its respective sensor 19 and output-signal, each body 3 may perform its function independently, regardless of how the sound signal 17 generated from the actuator 15 is divided between the plurality of bodies 3.

The impact sensor device 1 may also comprise a plurality of bodies 3, wherein each body 3 is provided with individual sound signals 17 at their individual first end sections 9, said plurality of sound signals 17 being provided by means of a corresponding plurality of actuators 15 comprised in the sensor device 1. Thus, such an embodiment of the sensor device 1 may have a similar appearance as the sensor device 1 depicted in fig. 1c, but having a plurality of actuators 15 providing said individual sound signals 17 into their respective associated bodies 3 instead.

Fig. 1d shows an impact sensor device 1 in a partly cross sectional side view according to an embodiment. The sensor device 1 depicted herein exhibits the flexibility of the elongated body 3, wherein said body 3 comprises two angled bends 25 over its extension. By means of utilizing a resilient material for the elongated body 3, said body may be very flexible so as to be able to conform to a wide range of various shapes and/or surfaces. This provides a highly versatile device, which is easy to use in a plurality of applications. The sound signal 17 moving through a body 3 comprising bends, corners and/or similar may of course be affected by the geometry of said body 3. However, due to the manner in which the device may be calibrated (as has been described earlier in the disclosure); such geometrical modifications are not detrimental to the functionality of the device.

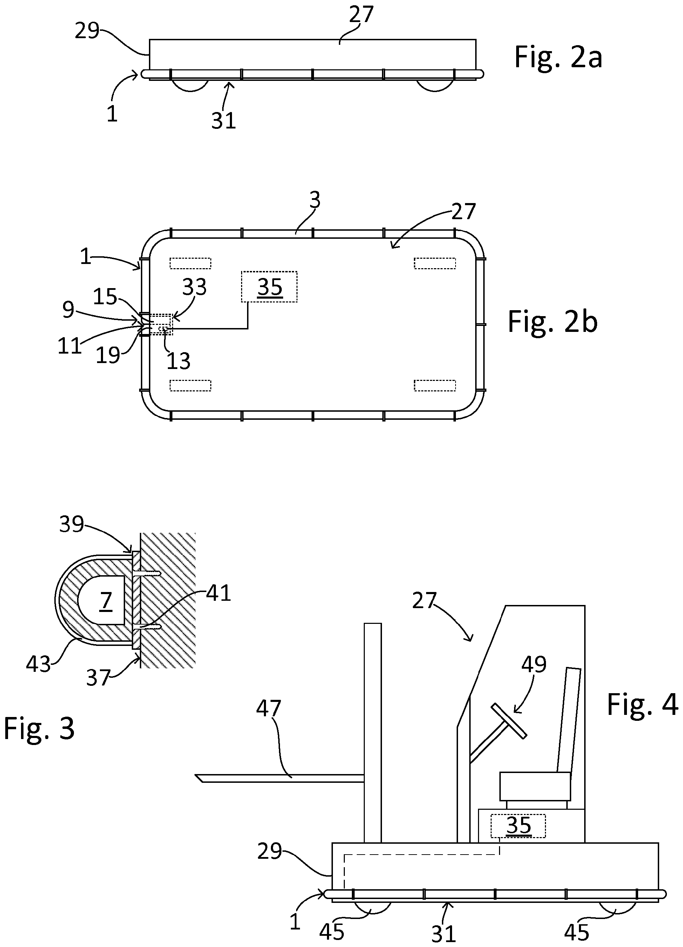

Fig. 2a and fig. 2b shows a schematic vehicle 27 provided with an impact sensor device 1 in a side view and in a top down view respectively. The impact sensor device 1 may, as depicted herein, be arranged to a material handling vehicle, which vehicle 27 in this case may be perceived as a floor-conveyor for indoor use. As such floor-conveyor type vehicles 27 are often used in facilities such as a warehouse or similar, which are usually rather crowded with shelves, other vehicles, goods, narrow aisles etc., such a vehicle 27 being provided with an impact sensor device 1 according to the disclosure may be highly beneficial as the risk of impacts or similar may be high in such an environment. As is seen in fig. 2a, the impact sensor device 1 may be arranged at an outer surface 29 of the vehicle 27. Thereby the sensor device 1 may acts as the outermost surface of such a vehicle 27, meaning no impact may occur between the vehicle 27 and an external object such as a vertical wall or similar, without the intermediate impact sensor device 1 being affected and thus detecting such an impact. The vehicle 27 as depicted in fig. 2a has a low height, and the impact sensor device 1 may be arranged in the vicinity of a lower surface 31 of the vehicle 27. Thus, the vehicle 27, which operates close to the ground, will benefit from a low positioning of the impact sensor device 1. This is ideal for detecting impacts with an external object such as a foot of a person for example, wherein the sensor device 1 assists in alleviating personal injury due to such impacts or collisions. As is seen in fig. 2b, the impact sensor device 1 according may be arranged to the vehicle 27 so that the body 3 of the impact sensor device 1 is arranged so as to encircle the vehicle 27. Furthermore, the first and second ends 9, 11 of the sensor device 1 may be arranged to have rounded corners and be turned in towards the vehicle 27, wherein the actuator 15 and the sensor 19 may be arranged within a recess 33 within a chassis of the vehicle 27. This type of arrangement leads to several technical advantages. The actuator 15 and the sensor 19 being arranged in such a manner will lead to no blind spots for the body 3 with regards to encircling the entirety of the vehicle 27, the actuator 15 and the sensor 19 will be more protected from harm as they are situated away from any impact risk zone around the vehicle 27, and while the actuator 15 and the sensor 19 may be fixedly arranged within the recess 33 of the chassis, the body 3 is still arranged at the outer surface 29 of the vehicle 27 making it easy to replace and/or perform maintenance to. As the actuator 15 and the sensor 19 are more delicate parts than the body 3 of the device 1, and are more expensive to manufacture, it is highly beneficial to arrange an impact sensor device 1 in this manner. If the device 1 experiences a large amount of impacts and collisions, the body 3 may be damaged and may need to be replaced over time. The actuator 15 and sensor 19 may thus remain in their relatively more protected environment while the body 3 is easy to reach and replace. Furthermore, as the body 3 is cheap to manufacture, it may be beneficial to have a storage of such bodies 3 as spare parts for the impact sensor device 1. As the body 3 preferably is comprised of a resilient material, it may further be possible to have a single-piece very long pre-manufactured body 3 in the form of a roll or similar. Thereby a specific length of said roll, suitable for a specific application, may simply be cut and used as a body 3 for an impact sensor device 1. The impact sensor device 1, when coupled to a vehicle 27, may further have the control unit 13 being arranged to be coupled to a control unit 35 of the vehicle 27, so as to be able to control movement of said vehicle 27. This allows for an interaction between the impact sensor device 1 and the vehicle 27, which may be utilized when an impact is detected. This will be described in more detail with reference to fig. 4.

Fig. 3 shows an impact sensor device 1 attached to a surface 37 in a cross sectional side view according to an embodiment. The impact sensor device 1 is herein not seen fully, as the cross sectional view is taken through a section of the elongated body 3 only. The body 3 according to this embodiment comprises a D-shape, wherein the flat base of the D-shape is arranged towards the surface 37 the device 1 is arranged to. The impact sensor device 1 herein may further comprise an attachment adapter 39, arranged to be fixedly attached to an object by means of first attachment means 41, and to receive and hold at least the elongated body 3 by means of second attachment means 43. The first attachment means 41 may, as depicted in fig. 3, be predrilled holes, which are arranged to receive screws that hold the attachment adapter 39 flush with the surface 37. The second attachment means 43 may, as depicted in fig. 3, comprise a strap-like element, arranged to encircle the body 3 and hold the body towards the attachment adapter 39. The strap-like element may comprise a resilient material that has similar characteristics as the body 3, so that such elements does not impair the functionality of the flexible body 3. The strap-like element may be attached at both ends to the attachment adapter 39, wherein the body 3 may be attached by means of inserting it through loops defined by the strap-like elements over the extension of the attachment adapter 39. Alternatively, the strap-like element may be fixedly attached to the attachment adapter 39 at one end, and comprise locking means for attaching the other end when the body 3 is arranged in place. Another possible embodiment may be that the strap-like elements may comprise two portions having opposite Velcro portions arranged thereto, wherein the two portions fast and easily may be attached and separated to and from each other as a means of assembling and disassembling the body 3 to the attachment adapter 39. The attachment adapter 39 makes assembly and maintenance even faster and easier. If combined with arranging the actuator 15 and the sensor 19 within a recess 33 of a vehicle 27 (as shown in fig. 2b), the impact sensor device 1 will have an optimized positioning, the most delicate and expensive parts are protected, and the body 3, which is exposed to the most wear and tear, is easy and cost effective to replace.

Fig. 4 shows a schematic vehicle 27 provided with an impact sensor device 1 in a side view according to an embodiment. The vehicle 27 according to this embodiment is a material handling vehicle, namely a fork-lift truck. The fork-lift truck may comprise at least three wheels 45, lifting means 47 for handling objects, and control means 49 for operating movement of the truck and the lifting means 47. The impact sensor device 1 as shown in fig. 4 may be perceived to be arranged to the vehicle 27 in a similar manner as the sensor device 1 coupled to the vehicle 27 as shown in fig. 2b. That is, the body 3 of the sensor device 1 may be arranged at an outer surface 29 so as to encircle the entirety of the vehicle 27. The actuator 15 and the sensor 19 may also be arranged in a similar recess in the chassis of the fork-lift truck. (It should herein be noted that the type of fork-lift truck depicted is not a limiting factor with regards to the sensor device.) The control unit 13 of the impact sensor device 1 may further be coupled to a control unit 35 of the vehicle 27, so as to establish a communication there between. The control unit 13 and/or the sensor 19 of the sensor device 1 may then be set up and calibrated in various ways depending on the desired function of the sensor device 1 and its communication with the vehicle 27. The control unit 13 may be arranged to stop movement of the vehicle 27 when the alteration of the sound signal reaches a predetermined first threshold. In other words, the control unit 13 of the sensor device 1 and the control unit 35 of the vehicle 27 may thus, due to their communication, fully stop the drive wheels of the vehicle 27 when the impact sensor device 1 detects an impact between the body 3 and an external object. Such an impact gives rise to an alteration of the geometric shape of the hollow interior of the body 3, which alteration in turn correlates to the sound signal being subjected to an alteration that corresponds to reaching the first threshold.

The control unit 13 may also be arranged to reverse movement of the vehicle 27 when the alteration of the sound signal reaches a predetermined second threshold. In other words, when the vehicle 27 is moving in one direction and an impact (said impact corresponding to the second threshold) is detected between the body 3 and an external object, the control unit 13 of the impact sensor device 1 will communicate to the control unit 35 of the vehicle 27 to move the vehicle 27 in the opposite direction to the one direction the vehicle 27 was moving. This may greatly decrease the risk of severe damage or personal injury as any force and/or impact subjected to such an external object will not only stop, but be removed completely in an automatic manner.

A fork-lift truck provided with an impact sensor device 1 according to the disclosure may thus exhibit an increased safety with regards to alleviating personal injury and material damage. The impact sensor device 1 being cost effective and easy to manufacture, assemble and perform maintenance to also provides said advantages to such a truck as the truck with regards to upholding a high safety to said truck and its operation environment. As the elongated body 3 is the part of the sensor device 1 that is exposed to the most wear and tear, and the fact that said body 3 is cheap and easy to manufacture, the maintenance of the truck coupled with the ability to hold a large amount of spare parts in the form of said body, becomes very cost effective.

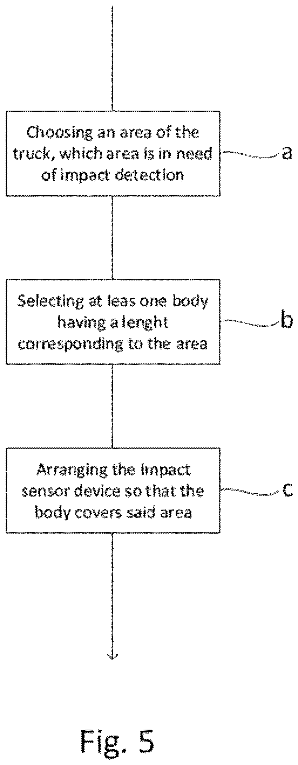

Fig. 5 shows a flowchart of a method for arranging an impact sensor device to a fork-lift truck. The method may be utilized as a means of providing any impact sensor device 1 according to the disclosure to a large variety of fork-lift trucks, such as a pedestrian controlled fork-lift truck, a reach fork-lift truck, an automatically controlled fork-lift truck, a guide rail guided fork-lift truck or other. The method may comprise the steps of: a) choosing an area of the fork-lift truck where impact detection is desired, b) selecting at least one elongated body with a length corresponding to the area of the fork-lift truck, and c) arranging the impact sensor device so that the at least one elongated body covers the chosen area of the fork-lift truck. Depending on each specific application, and thus correspondingly each specific area chosen for such a truck, different variables may be modified so as to provide the best possible impact detection for said truck. Such variables may for example be the positioning of the impact sensor device 1, the length of the body 3, the positioning of the body 3, the number of bodies 3 used or other. It should also be emphasized that the method disclosed above may be utilized to provide such a truck with an impact sensor device 1, as well as a re-assembly method for an impact sensor device 1 to a truck. If the truck had an existing sensor device 1 which is to be replaced and/or performed maintenance to, step c) may be slightly modified to only comprise arranging the body 3 of a sensor device 1 to the truck, wherein said body 3 also is coupled to already present actuator 15 and sensor 19 situated at the truck.

The foregoing description of the embodiments has been furnished for illustrative and descriptive purposes. It is not intended to be exhaustive, or to limit the embodiments to the variations described. Many modifications and variations will obviously be apparent to one skilled in the art. The embodiments have been chosen and described in order to best explicate principles and practical applications, and to thereby enable one skilled in the arts to understand the invention in terms of its various embodiments and with the various modifications that are applicable to its intended use. The components and features specified above may, within the framework of the disclosure, be combined between different embodiments specified.

## Claims

1. An impact sensor device (1), comprising an elongated body (3) having a circumferential outer wall (5) and a hollow interior (7), the outer wall (5) comprising a resilient material, the body (3) comprising a first end section (9) and second end section (11), the sensor device (1) further comprises a control unit (13),
**characterized in that**
an actuator (15) providing a sound signal (17) directed into the hollow interior (7) of the body (3) is arranged at the first end section (9), and a sensor (19) for monitoring the sound signal (17) is arranged at the second end section (11), and **in that** the resilient outer wall (5) of the body (3) is arranged so as to cause a geometrical change in a cross section of the hollow interior (7) when the body (3) is subjected to an impact with an external object (21), wherein the control unit (13) is arranged to monitor the sound signal (17) and alterations thereof, which alterations are contingent on geometrical changes of the cross section of the hollow interior (7).

2. The impact sensor device (1) according to claim 1, wherein it is arranged at an outer surface (29) of a vehicle (27).

3. The impact sensor device (1) according to claim 2, wherein the vehicle (27) is a material handling vehicle, preferably a fork-lift truck, even more preferred a floor-conveyor for indoor use.

4. The impact sensor device (1) according to any of claims 2 or 3, wherein the body (3) of the impact sensor device (1) is arranged so as to encircle the vehicle (27).

5. The impact sensor device (1) according to any of claims 2-4, wherein the control unit (13) is arranged to be coupled to a control unit (35) of the vehicle (27), so as to be able to control movement of said vehicle (27).

6. The impact sensor device (1) according to claim 5, wherein the control unit (13) is arranged to stop movement of the vehicle (27) when the alteration of the sound signal (27) reaches a predetermined first threshold.

7. The impact sensor device (1) according to claim 5, wherein the control unit (13) is arranged to reverse movement of the vehicle (27) when the alteration of the sound signal (17) reaches a predetermined second threshold.

8. The impact sensor (1) device according to any of the preceding claims, wherein it further comprising an attachment adapter (39), arranged to be fixedly attached to an object by means of first attachment means (41), and to receive and hold at least the elongated body (3) by means of second attachment means (43).

9. The impact sensor device (1) according to any of the preceding claims, wherein the device further comprises at least one additional body (3), each at least one additional body (3) comprising a circumferential outer wall (5) and a hollow interior (7), wherein each hollow interior (7) of each at least one additional body (3) is provided with a sound signal (17) at a first end section (9) of each additional body (3).

10. The impact sensor device (1) according to claim 9, wherein the sound signal (17) is divided between the body (3) and each at least one additional body (3), the sound signal (17) being provided by means of the actuator (15).

11. The impact sensor device (1) according to claim 9, wherein each body (3) is provided with individual sound signals (17) at their individual first end sections (9), said plurality of sound signals (17) being provided by means of a corresponding plurality of actuators (15) comprised in the sensor device (1).

12. The impact sensor device (1) according to any of the preceding claims, wherein the material of the body (3) is a polymeric material.

13. The impact sensor device (1) according to any of the preceding claims, wherein the sound signal (17) is comprised of ultrasound.

14. A fork-lift truck, comprising at least three wheels (45), lifting means (47) for handling objects, and control means (49) for operating movement of the truck and the lifting means (47), **characterized in that**
it comprises an impact sensor device (1) according to any of claims 1-13.

15. A method for arranging an impact sensor device (1) according to any of claims 1-13 to a fork-lift truck, the method comprising the steps of:
a) choosing an area of the fork-lift truck where impact detection is desired,
b) selecting at least one elongated body (3) with a length corresponding to the area of the fork-lift truck, and
c) arranging the impact sensor device (1) so that the at least one elongated body (3) covers the chosen area of the fork-lift truck.
